# EUROPÄISCHE PATENTSCHRIFT

(11) **EP 1 925 585 B1**
(45) Veröffentlichungstag und Bekanntmachung des Hinweises auf die Patenterteilung: **31.12.2014**
(21) Anmeldenummer: 07022229.4
(22) Anmeldetag: 15.11.2007
(51) Int. Cl.: G01M 1/12, B66C 23/78, B66C 23/80, B66C 23/90

(54) **Mobilkran**
Mobile crane
Grue mobile

(30) Priorität: 21.11.2006 DE 202006017724 U
(43) Veröffentlichungstag der Anmeldung: 28.05.2008
(73) Patentinhaber: Liebherr-Werk Ehingen GmbH, 89584 Ehingen/Donau (DE)
(72) Erfinder: Morath, Erwin, 89584 Lauterach (DE)
(74) Vertreter: Herrmann, Uwe

(56) Entgegenhaltungen:
- EP-A- 0 779 237
- EP-A- 1 659 235
- DE-A1-102005 034 377
- GB-A- 1 470 175

## Beschreibung

Die Erfindung betrifft einen Mobilkran mit einem drehbaren Ausleger, vorzugsweise Teleskopausleger.

Die Standsicherheit eines Mobilkrans hängt neben der Größe der an dem Ausleger hängenden Last vom Schwenkwinkel des Auslegers in der Wippebene, im Falle eines Teleskopauslegers von dessen Ausfahrlänge, vom Drehwinkel des Auslegers sowie schließlich von der Position der Stützfüße ab.

Aus der EP 779 237 B1 ist ein Mobilkran bekannt, bei dem zur Gewährleistung der Standsicherheit der 360° Drehwinkelbereich des Auslegers in mehrere Drehwinkelbereiche unterteilt ist, wobei für jeden dieser Drehwinkelbereiche ein einheitliches zulässiges Auslegermoment für diesen Winkelbereich in einer Tabelle abgelegt ist, wobei sich in den Bereichen des Mobilkrans, in denen die Schiebeholme weiter ausgefahren sind, selbstverständlich ein größeres zulässiges Auslegermoment ergibt, als in den Bereichen, in denen die Schiebeholme weniger weit bzw. nicht ausgefahren sind. Auf die Tabellen wird zur Prüfung der Standsicherheit des Krans zugegriffen.

Der vorliegenden Erfindung liegt die Aufgabe zugrunde, einen Mobilkran der eingangs genannten Art wie z.B. den in Dokument GB 1470175 offenbarten Mobilkran dahingehend weiterzubilden, dass dessen Standsicherheit auf vergleichsweise einfache Art und Weise gewährleistet werden kann. Diese Aufgabe wird durch einen Mobilkran mit den Merkmalen des Anspruchs 1 gelöst.

Danach ist vorgesehen, dass der Kran Mittel zur Ermittlung des Gesamtschwerpunktes des Krans, Mittel zur Bestimmung einer oder mehrerer Kipplinien des Krans sowie Mittel zur Gewährleistung der Standsicherheit des Krans aufweist, wobei die Mittel zur Gewährleistung der Standsicherheit des Krans derart ausgeführt sind, dass sie ein Signal abgeben und/oder die Kranbewegung unterbinden oder verändern, wenn der Abstand des Gesamtschwerpunktes von einer Kipplinie sich einem Grenzwert nähert oder einen Grenzwert erreicht oder unterschreitet und/oder wenn das Verhältnis aus dem Abstand des Gesamtschwerpunktes vom Drehkranzmittelpunkt zu dem Abstand der Kipplinie vom Drehkranzmittelpunkt in Richtung des Gesamtschwerpunktes sich einem Grenzwert nähert oder einen Grenzwert erreicht oder überschreitet.

Erfindungsgemäß ist somit vorgesehen, dass der Gesamtschwerpunkt des Krans ermittelt wird und sodann ermittelt wird, wie weit der Gesamtschwerpunkt des Krans von einer Kipplinie entfernt ist. Ebenso kann vorgesehen sein, dass das Verhältnis aus der Länge zweier Strecken gebildet wird, wobei die eine durch den Abstand des Gesamtschwerpunktes vom Drehkranzmittelpunkt und die andere durch den Abstand der Kipplinie vom Drehkranzmittelpunkt gebildet wird, wobei letzter derart bestimmt wird, dass die entsprechenden Gerade durch den Gesamtschwerpunkt sowie den Drehkranzmittelpunkt verläuft. Führt die Kranbewegung dazu, dass sich der Kran einem solchen Grenzwert nähert oder wird ein solcher Grenzwert erreicht oder überschritten bzw. unterschritten, kann erfindungsgemäß vorgesehen sein, dass ein Alarmsignal abgegeben wird und/oder die weitere Kranbewegung unterbunden oder langsam abgebremst wird.

Unter dem Begriff "Kranbewegung" ist jegliche Bewegung des Krans bzw. seiner Komponenten, wie z. B. die Drehbewegung des Auslegers, das Austeleskopieren des Auslegers oder das Verschwenken des Auslegers in der Wippebene zu verstehen.

Unter dem Begriff "Drehen des Auslegers" oder "Drehbewegung des Auslegers" ist die Drehbewegung des Auslegers als solche sowie auch die Drehbewegung eines Oberwagens zu verstehen, an dem der Ausleger angeordnet ist.

Die Erfindung betrifft ferner einen Mobilkran mit einem drehbaren Ausleger, beispielsweise mit einem Teleskopausleger oder Gitterausleger, mit Stützen, mit Mitteln zur Erfassung der in den Stützen herrschenden Drücke oder Kräfte sowie mit Mitteln zur Gewährleistung der Standsicherheit des Krans, wobei die Mittel zur Gewährleistung der Standsicherheit derart ausgeführt sind, dass sie eine Prüfung der Standsicherheit des Krans auf der Grundlage der in den Stützen herrschenden Drücke oder Kräfte vornehmen. Bei dieser Ausgestaltung der Erfindung werden aus den gemessenen Drücken/Kräften eine oder mehrere Kenngrößen zu jedem Betriebszustand des Krans ermittelt, mit deren Hilfe die Gefahr des Kippens des Krans rechtzeitig erkannt und dann verhindert werden kann.

Wird der Gesamtschwerpunkt überwacht, ist die Lage des Gesamtschwerpunktes zum Drehkranzmittelpunkt bekannt. Ist des Weiteren der Druck bzw. die Kraft in den Stützen sowie der Drehwinkel des Auslegers bzw. des Oberwagens bekannt, kann eine Bewegung, die den Druck oder die Kraft in einer der Stützen über einen Grenzwert hinaus ansteigen lassen würde, unterbunden werden. Denkbar ist es auch, die Bewegung zunächst zu verlangsamen und dann ganz zu unterbinden. Da im allgemeinen für jede Stütze Werte für maximal zulässige Drücke bzw. Kräfte bekannt sind, kann die Annährung oder das Erreichen dieser Grenzwerte dazu herangezogen werden, die Bewegung zu unterbinden oder zunächst zu verlangsamen und dann zu unterbinden.

Weiterhin kann vorgesehen sein, dass der Mobilkran Mittel zur Erfassung der Position der Stützen aufweist und dass die Mittel zur Gewährleistung der Standsicherheit derart ausgeführt sind, dass sie eine Prüfung der Standsicherheit des Krans auf der Grundlage der ermittelten Position der Stützten, die beispielsweise über die ausgefahrenen Schiebholmlängen ermittelbar sind, sowie auf der Grundlage der in den Stützen herrschenden Drücke oder Kräfte vornehmen.

In weiterer Ausgestaltung der Erfindung ist vorgesehen, dass der Kran Mittel zur Erfassung der Position der Stützen sowie Mittel zur Erfassung der in den Stützen herrschenden Drücke oder Kräfte aufweist, die mit den Mitteln zur Ermittlung des Gesamtschwerpunktes in Verbindung stehen, wobei die Mittel zur Ermittlung des Gesamtschwerpunktes derart ausgeführt sind, dass aus der Position der Stützen sowie in den von den Stützen herrschenden Drücken oder Kräften der Gesamtschwerpunkt des Krans ermittelt wird. Hinsichtlich der Kraftmessung wird insoweit auf die DE 10 2005 034377 verwiesen, auf deren Offenbarungsgehalt hiermit Bezug genommen wird.

Dabei kann vorgesehen sein, dass Schiebeholme mit daran angeordneten Stützen vorgesehen sind, wobei die Schiebeholme in beliebige Positionen oder in mehrere, beispielsweise drei Vorzugspositionen bewegbar sind, wie dies in der EP 779 237 B1 offenbart ist.

Die Mittel zur Erfassung der in den Stützen herrschenden Drücke oder Kräfte können derart ausgeführt sein, dass die Erfassung mittels Messung oder Berechnung erfolgt. Die Erfindung ist somit nicht auf die Messung der Drücke oder Kräfte beschränkt.

Die Mittel zur Gewährleistung der Standsicherheit können derart ausgeführt sein, dass der Abstand des Gesamtschwerpunktes zu den einzelnen Kipplinien bestimmt wird und dass der kleinste dieser Abstände den Mitteln zur Gewährleistung der Standsicherheit zugeführt bzw. von diesen zur Gewährleistung der Standsicherheit herangezogen wird. Bei dieser Ausführungsform ist somit der kleinste der Abstände des Gesamtschwerpunktes von den Kipplinien maßgeblich.

Vorzugsweise werden die Kipplinien dadurch erhalten, dass man Verbindungsgeraden zwischen jeweils zwei benachbarten Stützfüßen bildet, was im Falle der bevorzugten Ausgestaltung von vier Stützfüßen zu einem Standviereck führt.

In weiterer Ausgestaltung der Erfindung ist vorgesehen, dass der Drehwinkelbereich des Auslegers zur Bestimmung der Standsicherheit in Teilbereiche, vorzugsweise in vier Quadranten unterteilt ist, wobei die Mittel zur Gewährleistung der Standsicherheit derart ausgeführt sind, dass nur solche Kipplinien herangezogen werden, deren Schnittpunkt mit einer durch den Drehkranzmittelpunkt und den Gesamtschwerpunkt verlaufenden Gerade in demselben Teilbereich oder Quadranten liegt, wie der Gesamtschwerpunkt selbst. Andere Kipplinien, die einen derartigen Schnittpunkt nicht aufweisen, werden bei dieser Ausführungsform der Erfindung nicht berücksichtigt.

In weiterer Ausgestaltung der Erfindung sind die Mittel zur Erfassung der in den Stützen herrschenden Drücke oder Kräfte derart ausgeführt, dass die Drücke/Kräfte in den Stützen nur kolbenseitig oder kolben- und ringseitig erfasst werden. Eine kolben- und ringseitige Erfassung kann sinnvoll sein, wenn beim Einfahren der Abstützzylinder diese kolbenseitig mit Druck beaufschlagt werden, um das Bremsventil im Zylinder zu öffnen. In diesem Fall kann über einen ringseitigen Druckaufnehmer stets der tatsächliche Lastdruck bestimmt werden, der sodann der Ermittlung des Gesamtschwerpunktes zugrunde gelegt werden kann.

In weiterer Ausgestaltung der Erfindung sind die Mittel zur Erfassung der Position der Stützen derart ausgeführt, dass sie den Ausfahrzustand und/oder den Ausschwenkzustand der Schiebeholme mittels z. B. Transponder oder Seillängengeber erfassen. Die Schiebeholme können beispielsweise ausfahrbar und ausschwenkbar sein (K-Abstützung).

In weiterer Ausgestaltung der Erfindung ist vorgesehen, dass die Mittel zur Gewährleistung der Standsicherheit derart ausgeführt sind, dass sie die Drehbewegung des Auslegers und/oder die Verstellbewegung des Auslegers verlangsamen, wenn der Abstand des Gesamtschwerpunktes zu einer Kipplinie einen ersten Grenzwert erreicht oder diesen unterschreitet und/oder wenn das Verhältnis aus dem Abstand des Gesamtschwerpunktes vom Drehkranzmittelpunkt zu dem Abstand der Kipplinie zum Drehkranzmittelpunkt in Richtung des Gesamtschwerpunktes einen ersten Grenzwert erreicht oder überschreitet, und die genannten Bewegungen unterbindet, wenn der Abstand des Gesamtschwerpunktes zu einer Kipplinie einen zweiten Grenzwert erreicht oder unterschreitet oder das genannte Verhältnis einen zweiten Grenzwert erreicht oder überschreitet. In dieser Ausführungsform der Erfindung werden somit zwei Grenzwerte definiert, wobei bei Erreichen oder Über- bzw. Unterschreiten des ersten Grenzwertes eine Verlangsamung der relevanten Bewegung, beispielsweise der Drehbewegung des Auslegers erfolgt und bei Erreichen des zweiten Grenzwertes eine weitere Bewegung unterbunden wird, so dass rechtzeitig vor Erreichen der Kipplinie die fragliche Bewegung zum Stillstand kommt.

Die Verstellbewegung des Auslegers umfaßt beispielsweise das Teleskopieren und/oder das Wippen des Auslegers.

Denkbar ist es grundsätzlich, die Drehbewegung des Auslegers bzw. des Oberwagens und/oder die Verstellbewegung des Auslegers, insbesondere das Teleskopieren und/oder Wippen, zunächst zu verlangsamen erst dann ganz zu unterbinden.

Grundsätzlich kann des Weiteren vorgesehen sein, dass die Drehbewegung des Auslegers und/oder die Verstellbewegung des Auslegers vor Erreichen eines Grenzwertes kontinuierlich oder stufenweise verringert wird, was gegenüber einem abrupten Abbremsen den Vorteil hat, dass ein Pendeln der Last verhindert bzw. reduziert werden kann.

In weiterer Ausgestaltung der Erfindung sind die Mittel zur Gewährleistung der Standsicherheit derart ausgeführt, dass sie ein Drehen des Auslegers in einem Drehwinkelbereich unterbinden, in dem der Abstand des Gesamtschwerpunktes von einer Kipplinie einen Grenzwert erreicht oder unterschreitet und/oder in dem das Verhältnis aus dem Abstand des Gesamtschwerpunktes vom Drehkranzmittelpunkt zu dem Abstand der Kipplinie vom Drehkranzmittelpunkt in Richtung des Gesamtschwerpunktes einen Grenzwert erreicht oder überschreitet, oder wobei die Mittel zur Gewährleistung der Standsicherheit derart ausgeführt sind, dass sie eine Veränderung des Gesamtschwerpunktes derart vornehmen, dass der Ausleger bzw. der Oberwagen eine 360 ° Drehung innerhalb des durch die Kipplinie begrenzten Bereichs durchführen kann. Gemäß der letztgenannten Alternative wird somit eine 360 ° Drehung des Auslegers bzw. Oberwagens ermöglicht, wobei der Gesamtschwerpunkt derart verändert wird, dass er bei der Drehung des Auslegers innerhalb der zulässigen Bereiche verbleibt. Dies kann beispielsweise dadurch geschehen, dass während der Drehbewegung die Ausladung des Auslegers verringert wird, wodurch der Gesamtschwerpunkt näher an den Drehkranzmittelpunkt rückt.

Unter dem Begriff der "Drehbewegung des Auslegers" soll grundsätzlich auch die Drehbewegung eines Oberwagens verstanden werden, an dem der Ausleger angeordnet ist.

In weiterer Ausgestaltung der vorliegenden Erfindung ist vorgesehen, dass für einen oder mehrere Rüstzustände die Drehwinkelbereiche des Auslegers in Abhängigkeit der Auslegerlänge und des Auslegerwinkels abgespeichert sind, in denen die Standsicherheit des Krans gewährleistet ist. Denkbar ist beispielsweise einen Speicher vorzusehen, der für einen oder mehrere vorgegebenen Rüstzustände und für eine oder mehrere vorgegebene Traglasten in Abhängigkeit der Auslegerlänge und den Auslegerwinkel Drehwinkelbereiche enthält, in denen ein Drehen des Oberwagens bzw. Auslegers möglich ist, d. h. in denen die Standsicherheit des Krans gewährleistet bleibt. Die Mittel zur Gewährleistung der Standsicherheit greifen auf diese gespeicherten Werte zu und lassen eine Drehung nicht oder nur unter Abgabe eines Alarmsignals in den Drehwinkelbereichen zu, in denen die Standsicherheit nicht gewährleistet ist. Vorzugsweise erfolgt diese Abspeicherung der zulässigen Drehwinkelbereiche für unterschiedliche Traglasten.

Weitere Einzelheiten und Vorteile der Erfindung werden anhand eines in der Zeichnung dargestellten Ausführungsbeispiels erläutert. Es zeigen:
- Figur 1:: eine schematische Rückansicht eines Mobilkrans gemäß der Erfindung,
- Figur 2:: eine schematische Draufsicht eines Mobilkrans gemäß der Erfindung,
- Figur 3:: eine Darstellung der Kipplinien sowie des Verlaufs des Gesamtschwerpunktes und des Auslegerendpunktes für unterschiedliche Ausleger-Drehwinkel und
- Figur 4:: eine schematische Draufsicht eines Mobilkrans mit Darstellung der Kipplinien sowie der Auslegerrichtung.

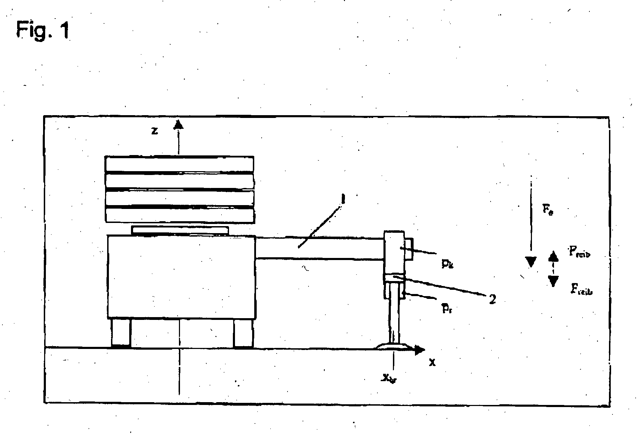

In Figur 1 ist ein Mobilkran der vorliegenden Erfindung in einer Ansicht von hinten dargestellt. Das Bezugszeichen 1 kennzeichnet einen Schiebeholm, der horizontal in den Unterwagen des Mobilkrans hydraulisch ein- und ausfahrbar ist. In dessen Endbereich befinden sich Abstützfüße mit Abstützzylindern 2, die vertikal verfahren werden können und eine Abstützung des Krans während des Betriebes sicherstellen. Die Bezeichnungen pₖ und pᵣ kennzeichnen die Drücke in der Kolbenfläche sowie in der Ringfläche der Kolbenzylindereinheit zum Aus- und Einfahren der Abstützfüße.

Das Bezugszeichen x kennzeichnet die Koordinate in Querrichtung des Mobilkranunterwagens, wobei der Wert Xₕᵣ in dem hier dargestellten Ausführungsbeispiel die x-Position der Abstützung hinten rechts kennzeichnet.

Die Parameter Fₛ und F_{reib} kennzeichnen die von der jeweiligen Stütze zu tragende Stützkraft sowie die Reibkräfte im Stützzylinder, die je nach dem, ob die Stütze aus-oder eingefahren wird, positiv oder negativ sind.

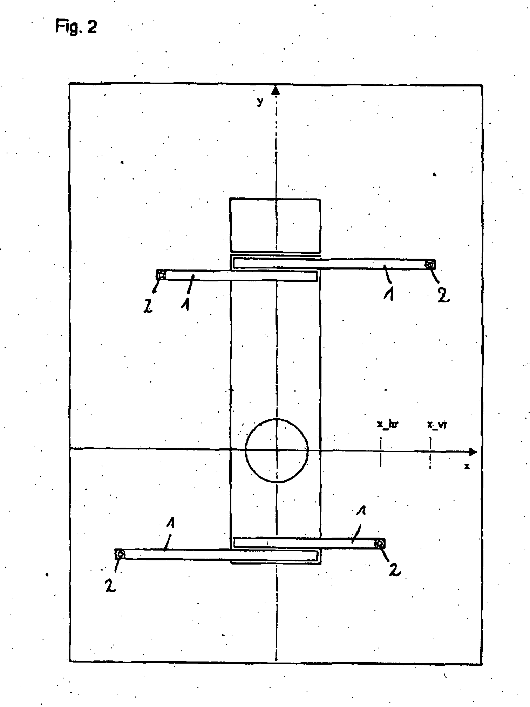

Figur 2 zeigt den Kran in einer schematischen Draufsicht und verdeutlicht, dass dieser über vier Schiebeholme 1 verfügt, die in ihren Endbereichen jeweils mit einem Abstützfuß versehen sind, der über einen Abstützzylinder 2 aus- und einfahrbar ist.

Wie dies aus Figur 2 hervorgeht, verläuft die Ordinate y in Längsrichtung des Unterwagens und die Abszisse x in Querrichtung des Unerwagens. Das Koordinatensystem ist hier derart gewählt, dass es seinen Ursprung im Drehkranzmittelpunkt hat, um den der Oberwagen mit Ausleger um den Unterwagen drehbar ist.

In dem in Figur 2 dargestellten Ausführungsbeispiel weist die Abstützung hinten rechts den Abzissenwert x_hr und die Abstützung vorne rechts den Wert x_vr auf.

Die Verbindungslinien zwischen jeweils zwei benachbarten Abstützfüßen bilden die Kipplinien des Mobilkrans. Die Standsicherheit des Krans ist gewährleistet, so lange sich der Gesamtschwerpunkt des Krans innerhalb des durch die Kipplinien begrenzten Standvierecks bewegt.

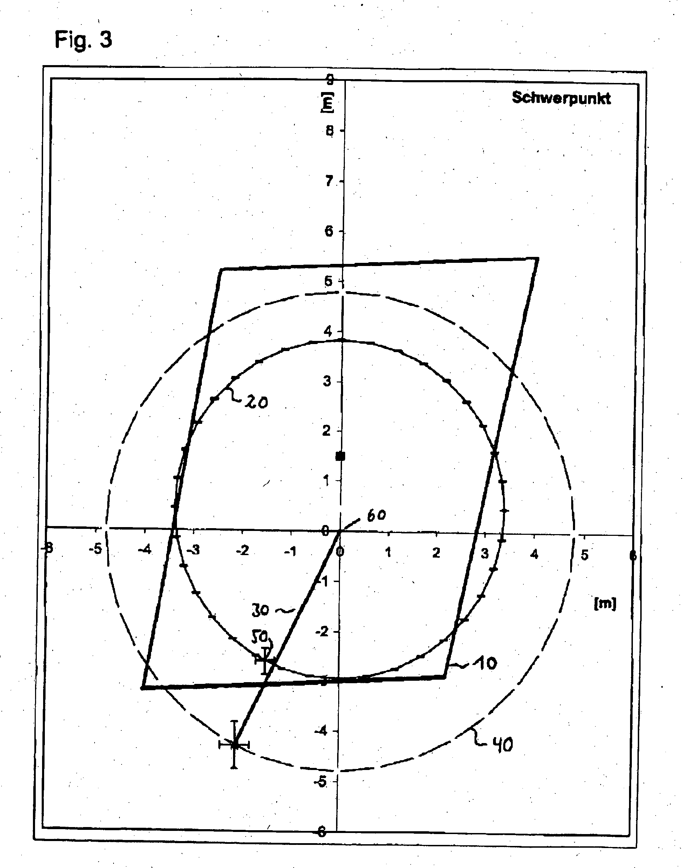

In Figur 3 ist ein solches Standviereck mit dem Bezugszeichen 10 gekennzeichnet. Die Linie 20 kennzeichnet bei einem bestimmten Rüstzustand, bestimmter Traglast, bestimmter Auslegerlänge und bestimmtem Auslegerwinkel den Verlauf des Gesamtschwerpunktes bei einer Drehung des Auslegers 30 um 360 °. Der Verlauf der Auslegerspitze ist durch den Kreis 40 gekennzeichnet. Das Bezugszeichen 50 kennzeichnet die aktuelle Position des Gesamtschwerpunktes bei dem hier dargestellten Drehwinkel des Auslegers 30. Wie dies aus Figur 3 hervorgeht, befindet sich in einem bestimmten Winkelbereich des Auslegers 40 der Gesamtschwerpunkt außerhalb des Standviereckes 10, so dass es zu einem Kippen des Krans kommen kann.

Wie dies weiter aus Figur 3 hervorgeht, wird dem tatsächlichen Gesamtschwerpunkt ein Sicherheitszuschlag hinzugerechnet, was dazu führt, dass auch ein Unterschreiten eines bestimmten Abstandes zwischen dem Gesamtschwerpunkt und der Kipplinie nicht zulässig ist bzw. dass ein solcher Zustand nicht oder nicht ohne Alarmierung des Bedieners angefahren werden kann. Denkbar ist, ein Alarmsignal zu erzeugen, wenn der Abstand der Kipplinie vom Gesamtschwerpunkt den dargestellten Sicherheitszuschlag unterschreitet und eine weitere Kranbewegung zu unterbinden oder zu verlangsamen, wenn der Gesamtschwerpunkt sich weiter der Kipplinie nähert.

Will der Kranfahrer den Ausleger in dem in Figur 3 dargestellten Beispiel um 360 ° verschwenken, hat er den Gesamtschwerpunkt derart nach innen, d. h. zum Drehkranzmittelpunkt 60 zu verlegen, dass dies möglich ist. Dies kann er beispielsweise dadurch erreichen, dass die Auslegerlänge des Teleskopauslegers 40 verringert oder der Schwenkwinkel des Auslegers vergrößert wird. Auch eine automatische Verstellung der Position des Gesamtschwerpunktes ist möglich. Der Gesamtschwerpunkt wird mittels der gemessenen Stützdrücke und der gemessenen Schiebeholmlängen berechnet.

Erreicht der Kran einen Grenzwert oder näher sich der Kran einem Grenzwert, bei dem die Kippsicherheit mit oder ohne Sicherheitszuschlag nicht mehr gewährleistet werden kann, kann dies dem Kranfahrer geeignet angezeigt werden, beispielsweise auf einem Display oder akustisch. Alternativ oder zusätzlich dazu besteht die Möglichkeit, den Kran dahingehend abzuschalten, dass eine Bewegung in dem gefährdeten Bereich nicht möglich ist.

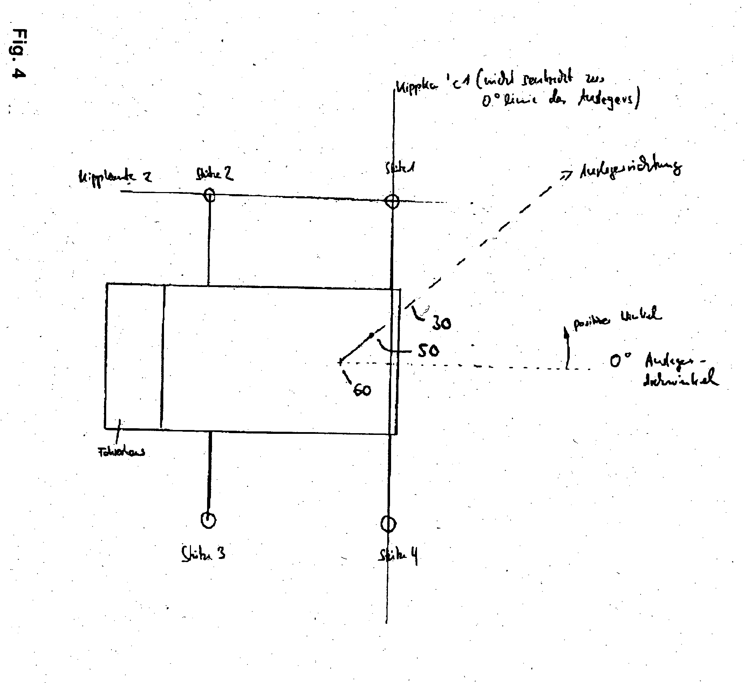

Figur 4 zeigt den Mobilkran gemäß der vorliegenden Erfindung in einer weiteren Ausführungsform. In dieser Ausgestaltung der Erfindung wird der Gesamtschwerpunkt 50 überwacht, so dass dessen Lage zum Drehkranzmittelpunkt 60 bekannt ist. Weiter wird der Druck und/oder die Kraft in den Stützen ermittelt und es ist der Drehwinkel des Oberwagens und damit auch des Auslegers 30 bekannt.

Vorzugsweise ist für jede der Stützen ein maximal zulässiger Druck- und/oder Kraftwert bekannt.

Steigt der Druck oder die Kraft in dem in Figur 4 dargestellten Beispiel in der Stütze 1 gegen einen Grenzwert an oder wird dieser Grenzwert erreicht, kann ein Abwippen und eine weitere Linksdrehung, d.h. eine Vergrößerung des Auslegerwinkels, des Oberwagens mit Ausleger 30 verhindert werden. Diese Bewegungen können gestoppt oder zunächst verlangsamt und dann unterbunden werden. Durch beide Bewegungen würde sonst der Druck / die Kraft in der Stütze 1 vergrößert.

Die vorliegende Erfindung ist nicht auf den Fall beschränkt, dass der Gesamtschwerpunkt zwischen Drehkranzmittelpunkt und der Last am Ausleger liegt. Bei steil gestelltem Ausleger kann der Gesamtschwerpunkt auch zwischen Drehkranzmittelpunkt und Ballast liegen. In diesem Fall ist ein Rückwärtskippen zu verhindern und die Bewegungen sind zu unterbinden oder zunächst zu verlangsamen und dann zu unterbinden.

## Patentansprüche

1. Mobilkran mit einem drehbaren Ausleger, vorzugsweise Teleskopausleger, mit Mitteln zur Ermittlung des Gesamtschwerpunktes des Krans, mit Mitteln zur Bestimmung einer oder mehrerer Kipplinien des Krans sowie mit Mitteln zur Gewährleistung der Standsicherheit des Krans, wobei die Mittel zur Gewährleistung der Standsicherheit derart ausgeführt sind, dass sie ein Signal abgeben und/oder die weitere Kranbewegung unterbinden oder verändern, wenn der Abstand des Gesamtschwerpunktes von einer Kipplinie sich einem Grenzwert nähert oder einen Grenzwert erreicht oder unterschreitet und/oder wenn das Verhältnis aus dem Abstand des Gesamtschwerpunktes vom Drehkranzmittelpunkt zu dem Abstand der Kipplinie vom Drehkranzmittelpunkt in Richtung des Gesamtschwerpunktes sich einem Grenzwert nähert oder einen Grenzwert erreicht oder überschreitet, **dadurch gekennzeichnet dass**, der Mobilkran des Weiteren Stützen, Mittel zur Erfassung der in den Stützen herrschenden Drücke oder Kräfte sowie Mittel aufweist, die derart ausgeführt sind, dass sie eine weitere Kranbewegung unterbinden oder zunächst verlangsamen und dann unterbinden, die zu einem Ansteigen des Drucks oder der Kraft in einer der Stützen über einen Grenzwert hinaus führen würde.

2. Mobilkran nach Anspruch 1, **dadurch gekennzeichnet, dass** der Kran des Weiteren Mittel zur Erfassung der Position der Stützen aufweist, wobei die Mittel zur Erfassung der Position der Stützen sowie die Mittel zur Erfassung der in den Stützen herrschenden Drücke oder Kräfte mit den Mitteln zur Ermittlung des Gesamtschwerpunktes in Verbindung stehen, wobei die Mittel zur Ermittlung des Gesamtschwerpunktes derart ausgeführt sind, dass aus der Position der Stützen sowie aus den von den Stützen aufgenommenen Drücken oder Kräften der Gesamtschwerpunkt des Krans ermittelt wird.

3. Mobilkran nach einem der vorhergehenden Ansprüche, **dadurch gekennzeichnet, dass** die Mittel zur Erfassung der in den Stützen herrschenden Drücke oder Kräfte derart ausgeführt sind, dass die Erfassung durch Messung oder durch Berechnung erfolgt.

4. Mobilkran nach einem der vorhergehenden Ansprüche, **dadurch gekennzeichnet, dass** die Mittel zur Gewährleistung der Standsicherheit derart ausgeführt sind, dass der Abstand des Gesamtschwerpunktes zu den einzelnen Kipplinien bestimmt wird und dass der kleinste dieser Abstände den Mitteln zur Gewährleistung der Standsicherheit zugeführt bzw. von diesen zur Gewährleistung der Standsicherheit herangezogen wird.

5. Mobilkran nach einem der vorhergehenden Ansprüche, **dadurch gekennzeichnet, dass** der Drehwinkelbereich des Auslegers zur Bestimmung der Standsicherheit in Teilbereiche, vorzugsweise in vier Quadranten unterteilt ist, wobei die Mittel zur Gewährleistung der Standsicherheit derart ausgeführt sind, dass nur solche Kipplinien herangezogen werden, deren Schnittpunkt mit einer durch den Drehkranzmittelpunkt und den Gesamtschwerpunkt verlaufenden Gerade in demselben Teilbereich oder Quadranten liegt, wie der Gesamtschwerpunkt selbst.

6. Mobilkran nach einem der vorhergehenden Ansprüche, **dadurch gekennzeichnet, dass** die Mittel zur Erfassung der in den Stützen herrschenden Drücke oder Kräfte derart ausgeführt sind, dass die Drücke/Kräfte in den Stützen nur kolbenseitig oder kolben- und ringseitig erfasst werden.

7. Mobilkran nach einem der vorhergehenden Ansprüche, **dadurch gekennzeichnet, dass** die Stützen an ausfahrbaren und/oder ausschwenkbaren Schiebeholmen angeordnet sind und dass die Mittel zur Erfassung der Position der Stützen derart ausgeführt sind, dass sie den Ausfahr-/ Ausschwenkzustand der Schiebeholme mittels Transponder oder Seillängengeber erfassen.

8. Mobilkran nach einem der vorhergehenden Ansprüche, **dadurch gekennzeichnet, dass** die Mittel zur Gewährleistung der Standsicherheit derart ausgeführt sind, dass sie die Drehbewegung des Auslegers und/oder die Verstellbewegung des Auslegers verlangsamen, wenn der Abstand des Gesamtschwerpunktes zu einer Kipplinie einen ersten Grenzwert erreicht oder diesen unterschreitet und/oder wenn das Verhältnis aus dem Abstand des Gesamtschwerpunktes vom Drehkranzmittelpunkt zu dem Abstand der Kipplinie vom Drehkranzmittelpunkt in Richtung des Gesamtschwerpunktes einen ersten Grenzwert erreicht oder überschreitet, und unterbindet, wenn der Abstand des Gesamtschwerpunktes zu einer Kipplinie einen zweiten Grenzwert erreicht oder unterschreitet oder das genannte Verhältnis einen zweiten Grenzwert erreicht oder überschreitet.

9. Mobilkran nach einem der vorhergehenden Ansprüche, **dadurch gekennzeichnet, dass** die Drehbewegung des Auslegers und/oder die Verstellbewegung des Auslegers vor Erreichen eines Grenzwertes kontinuierlich oder stufenweise verringert wird.

10. Mobilkran nach einem der vorhergehenden Ansprüche, **dadurch gekennzeichnet, dass** die Mittel zur Gewährleistung der Standsicherheit derart ausgeführt sind, dass sie ein Drehen des Auslegers in einem Drehwinkelbereich unterbinden, in dem der Abstand des Gesamtschwerpunktes von einer Kipplinie sich einem Grenzwert nähert oder einen Grenzwert erreicht oder unterschreitet und/oder in dem das Verhältnis aus dem Abstand des Gesamtschwerpunktes vom Drehkranzmittelpunkt zu dem Abstand der Kipplinie vom Drehkranzmittelpunkt in Richtung des Gesamtschwerpunktes sich einem Grenzwert nähert oder einen Grenzwert erreicht oder überschreitet, oder derart ausgeführt sind, dass sie eine Veränderung des Gesamtschwerpunktes derart vornehmen, dass der Ausleger um 360° drehbar ist.

11. Mobilkran nach Anspruch 10, **dadurch gekennzeichnet, dass** die Mittel zur Veränderung des Gesamtschwerpunktes derart ausgeführt sind, dass sie eine Veränderung der Auslegerlänge und/oder eine Veränderung des Auslegerwinkels herbeiführen.

12. Mobilkran nach einem der vorhergehenden Ansprüche, **dadurch gekennzeichnet, dass** für einen vorgegebenen Rüstzustand die Drehwinkelbereiche des Auslegers bzw. des Oberwagens in Abhängigkeit der Auslegerlänge und des Auslegerwinkels abgespeichert sind, in denen die Standsicherheit des Krans gewährleistet ist.

13. Mobilkran nach Anspruch 12, **dadurch gekennzeichnet, dass** die Drehwinkelbereiche für unterschiedliche Traglasten abgespeichert sind.

## Claims

1. A mobile crane with a rotatable boom, preferably telescopic boom, with means for determining the overall center of gravity of the crane, with means for determining one or more tilting lines of the crane, and with means for ensuring the stability of the crane, wherein the means for ensuring the stability are designed such that they emit a signal and/or inhibit or change the further crane movement when the distance of the overall center of gravity from a tilting line approaches a limit value or reaches or falls below a limit value and/or when the ratio of the distance of the overall center of gravity from the slewing ring center to the distance of the tilting line from the slewing ring center in direction of the overall center of gravity approaches a limit value or reaches or exceeds a limit value, **characterized in that** the mobile crane furthermore includes props, means for detecting the pressures or forces existing in the props as well as means which are designed such that they inhibit or first slow down and then inhibit a further crane movement which would lead to the pressure or the force in one of the props rising beyond a limit value.

2. The mobile crane according to claim 1, **characterized in that** the crane furthermore includes means for detecting the position of the props, wherein the means for detecting the position of the props and the means for detecting the pressures or forces existing in the props are connected with the means for determining the overall center of gravity, wherein the means for determining the overall center of gravity are designed such that from the position of the props and from the pressures or forces absorbed by the props the overall center of gravity of the crane is determined.

3. The mobile crane according to any of the preceding claims, **characterized in that** the means for detecting the pressures or forces existing in the props are designed such that the detection is effected by measurement or by calculation.

4. The mobile crane according to any of the preceding claims, **characterized in that** the means for ensuring the stability are designed such that the distance of the overall center of gravity to the individual tilting lines is determined and that the smallest of these distances is supplied to the means for ensuring the stability or is used by the same to ensure the stability.

5. The mobile crane according to any of the preceding claims, **characterized in that** for determining the stability the slewing angle range of the boom is divided into sections, preferably into four quadrants, wherein the means for ensuring the stability are designed such that only those tilting lines are used whose intersection with a straight line extending through the slewing ring center and the overall center of gravity lies in the same section or quadrant as the overall center of gravity itself.

6. The mobile crane according to any of the preceding claims, **characterized in that** the means for detecting the pressures or forces existing in the props are designed such that the pressures/forces in the props are detected only on the piston side or on the piston and ring side.

7. The mobile crane according to any of the preceding claims, **characterized in that** the props are arranged on extendable and/or pivotable sliding beams and that the means for detecting the position of the props are designed such that they detect the extended/pivoted state of the sliding beams by means of transponders or cable length sensors.

8. The mobile crane according to any of the preceding claims, **characterized in that** the means for ensuring the stability are designed such that they slow down the slewing movement of the boom and/or the adjusting movement of the boom, when the distance of the overall center of gravity to a tilting line reaches a first limit value or falls below the same and/or when the ratio of the distance of the overall center of gravity from the slewing ring center to the distance of the tilting line from the slewing ring center in direction of the overall center of gravity reaches or exceeds a first limit value, and inhibits when the distance of the overall center of gravity to a tilting line reaches or falls below a second limit value or said ratio reaches or exceeds a second limit value.

9. The mobile crane according to any of the preceding claims, **characterized in that** the slewing movement of the boom and/or the adjusting movement of the boom is reduced continuously or incrementally before reaching a limit value.

10. The mobile crane according to any of the preceding claims, **characterized in that** the means for ensuring the stability are designed such that they inhibit slewing of the boom in a slewing angle range in which the distance of the overall center of gravity from a tilting line approaches a limit value or reaches or falls below a limit value and/or in which the ratio of the distance of the overall center of gravity from the slewing ring center to the distance of the tilting line from the slewing ring center in direction of the overall center of gravity approaches a limit value or reaches or exceeds a limit value, or are designed such that they perform a change of the overall center of gravity such that the boom is rotatable by 360°.

11. The mobile crane according to claim 10, **characterized in that** the means for changing the overall center of gravity are designed such that they bring about a change of the boom length and/or a change of the boom angle.

12. The mobile crane according to any of the preceding claims, **characterized in that** for a specified setup state those slewing angle ranges of the boom or the uppercarriage are stored in dependence on the boom length and the boom angle, in which the stability of the crane is ensured.

13. The mobile crane according to claim 12, **characterized in that** the slewing angle ranges are stored for different lifting capacities.

## Revendications

1. Grue mobile, comportant une flèche rotative, de préférence une flèche télescopique, des moyens pour déterminer le centre de gravité global de la grue, des moyens pour déterminer une ou plusieurs lignes de basculement de la grue, ainsi que des moyens pour garantir la stabilité de la grue, lesdits moyens pour garantir la stabilité étant configurés de telle sorte qu'ils délivrent un signal et/ou empêchent ou modifient la poursuite du mouvement de la grue lorsque la distance entre le centre de gravité et une ligne de basculement s'approche d'une valeur limite ou atteint ou est inférieure à une valeur limite et/ou lorsque le rapport de la distance entre le centre de gravité global et le centre de la couronne d'orientation sur la distance entre la ligne de basculement et le centre de la couronne d'orientation dans la direction du centre de gravité global s'approche d'une valeur limite ou atteint ou est supérieur à une valeur limite, **caractérisée en ce que** la grue mobile comporte, en outre, des béquilles, des moyens pour détecter les pressions ou forces régnant dans les béquilles, ainsi que des moyens qui sont configurés de telle sorte qu'ils empêchent ou ralentissent d'abord et empêchent ensuite la poursuite du mouvement de la grue qui entraînerait une augmentation au-dessus d'une valeur limite de la pression ou de la force dans l'une des béquilles.

2. Grue mobile selon la revendication 1, **caractérisée en ce que** la grue comporte, en outre, des moyens pour détecter la position des béquilles, lesdits moyens pour détecter la position des béquilles, ainsi que les moyens pour détecter les pressions ou forces régnant dans les béquilles étant reliés aux moyens pour déterminer le centre de gravité global, les moyens pour déterminer le centre de gravité global étant configurés de façon à déterminer le centre de gravité global de la grue à partir de la position des béquilles, ainsi qu'à partir des pressions ou forces enregistrées pour les béquilles.

3. Grue mobile selon l'une quelconque des revendications précédentes, **caractérisée en ce que** les moyens pour détecter les pressions ou forces régnant dans les béquilles sont configurés de telle sorte que la détection est effectuée au moyen d'une mesure ou par calcul.

4. Grue mobile selon l'une quelconque des revendications précédentes, **caractérisée en ce que** les moyens pour garantir la stabilité sont configurés de façon à déterminer la distance entre le centre de gravité global et les différentes lignes de basculement et **en ce que** la plus petite de ces distances est acheminée vers les moyens pour garantir la stabilité ou est prise en compte par ces derniers pour garantir la stabilité.

5. Grue mobile selon l'une quelconque des revendications précédentes, **caractérisée en ce que**, pour déterminer la stabilité, la zone d'angle de rotation de la flèche est divisée en sous-zones, de préférence en quatre quadrants, lesdits moyens pour garantir la stabilité étant configurés de façon à ne prendre en compte que les lignes de basculement dont le point d'intersection avec une droite traversant le centre de la couronne d'orientation et le centre de gravité global se situe dans la même sous-zone ou le même quadrant que le centre de gravité global lui-même.

6. Grue mobile selon l'une quelconque des revendications précédentes, **caractérisée en ce que** les moyens pour détecter les pressions ou forces régnant dans les béquilles sont configurés de telle sorte que les pressions ou forces dans les béquilles sont détectées uniquement du côté vérin ou du côté vérin et anneau.

7. Grue mobile selon l'une quelconque des revendications précédentes, **caractérisée en ce que** les béquilles sont disposées sur des longerons coulissants extractibles et/ou pivotants et **en ce que** les moyens pour détecter la position des béquilles sont configurés de telle sorte qu'ils détectent l'état d'extraction ou de pivotement des longerons coulissants au moyen de transpondeurs ou capteurs de longueurs de corde.

8. Grue mobile selon l'une quelconque des revendications précédentes, **caractérisée en ce que** les moyens pour garantir la stabilité sont configurés de telle sorte qu'ils ralentissent le mouvement de rotation de la flèche et/ou le mouvement de réglage de la flèche lorsque la distance entre le centre de gravité global et une ligne de basculement atteint une première valeur limite ou est inférieure à celle-ci et/ou lorsque le rapport de la distance entre le centre de gravité global et le centre de la couronne d'orientation sur la distance entre la ligne de basculement et le centre de la couronne d'orientation dans la direction du centre de gravité global atteint ou est supérieur à une première valeur limite, et les empêchent lorsque la distance entre le centre de gravité global et une ligne de basculement atteint ou est inférieure à une deuxième valeur limite ou ledit rapport atteint ou est supérieur à une deuxième valeur limite.

9. Grue mobile selon l'une quelconque des revendications précédentes, **caractérisée en ce que** le mouvement de rotation de la flèche et/ou le mouvement de réglage de la flèche est diminué en continu ou graduellement avant qu'une valeur limite soit atteinte.

10. Grue mobile selon l'une quelconque des revendications précédentes, **caractérisée en ce que** les moyens pour garantir la stabilité sont configurés de telle sorte qu'ils empêchent une rotation de la flèche dans une zone d'angle de rotation, dans laquelle la distance entre le centre de gravité global et une ligne de basculement s'approche d'une valeur limite ou atteint ou est inférieure à une valeur limite, et/ou dans laquelle le rapport de la distance entre le centre de gravité global et le centre de la couronne d'orientation sur la distance entre la ligne de basculement et le centre de la couronne d'orientation dans la direction du centre de gravité global s'approche d'une valeur limite ou atteint ou est supérieur à une valeur limite, ou sont configurés de telle sorte qu'ils procèdent à une variation du centre de gravité global de telle sorte que la flèche est apte à tourner sur 360°.

11. Grue mobile selon la revendication 10, **caractérisée en ce que** les moyens pour faire varier le centre de gravité global sont configurés de telle sorte qu'ils provoquent une variation de la longueur de la flèche et/ou une variation de l'angle de la flèche.

12. Grue mobile selon l'une quelconque des revendications précédentes, **caractérisée en ce que** pour un état d'équipement déterminé, les zones d'angle de rotation de la flèche ou du châssis supérieur sont mémorisées en fonction de la longueur de la flèche et de l'angle de la flèche pour lesquels la stabilité de la grue est garantie.

13. Grue mobile selon la revendication 12, **caractérisée en ce que** les zones d'angle de rotation sont mémorisées pour différents chargements.
